(19) Europäisches Patentamt
European Patent Office
Office européen des brevets

(11) **EP 3 772 460 B1**

(12) **EUROPEAN PATENT SPECIFICATION**

(45) Date of publication and mention
of the grant of the patent:
**13.07.2022  Bulletin 2022/28**

(21) Application number: **19191025.6**

(22) Date of filing: **09.08.2019**

(51) International Patent Classification (IPC):
**B64C 27/08** (2006.01)    **B64C 27/20** (2006.01)
**B64C 39/00** (2006.01)    **B64C 39/02** (2006.01)

(52) Cooperative Patent Classification (CPC):
**B64C 39/024;** B64C 2201/108; B64C 2201/128;
B64C 2201/143

(54) **METHOD FOR CONTROLLING A PLURALITY OF HOVER-CAPABLE AIRCRAFT AND FLYING LOAD TRANSPORT SYSTEM**

VERFAHREN ZUR STEUERUNG EINER VIELZAHL VON SCHWEBEFÄHIGEN FLUGZEUGEN UND FLUGLASTTRANSPORTSYSTEM

PROCÉDÉ DE COMMANDE D'UNE PLURALITÉ D'AÉRONEFS POUVANT EFFECTUER DES VOLS STATIONNAIRES ET SYSTÈME DE TRANSPORT DE CARGAISON AÉRIENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.02.2021   Bulletin 2021/06**

(73) Proprietors:
• **Volocopter GmbH**
  **76646 Bruchsal (DE)**
• **CNRS**
  **75016 Paris (FR)**

(72) Inventors:
• **Yüksel, Burak**
  **69120 Heidelberg (DE)**
• **Franchi, Antonio**
  **31000 Toulouse (FR)**

(74) Representative: **Lemcke, Brommer & Partner Patentanwälte Partnerschaft mbB Siegfried-Kühn-Straße 4 76135 Karlsruhe (DE)**

(56) References cited:
**EP-A1- 2 881 324    WO-A1-2019/079100 US-B1- 9 422 139**

• **MAZA I ET AL: "Multi-UAV Cooperation and Control for Load Transportation and Deployment", JOURNAL OF INTELLIGENT AND ROBOTIC SYSTEMS ; THEORY AND APPLICATIONS - (INCORPORATING MECHATRONIC SYSTEMS ENGINEERING), KLUWER ACADEMIC PUBLISHERS, DO, vol. 57, no. 1-4, 13 August 2009 (2009-08-13), pages 417-449, XP019770245, ISSN: 1573-0409**

## Description

The invention relates to a method for controlling a plurality of hover-capable aircraft, preferably vertical take-off and landing multicopters having a plurality of spaced-apart, electrically driven rotors, during transportation of a load, according to claim 1.

The invention further relates to a flying load transport system comprising a load and a plurality of hover-capable aircraft, preferably vertical take-off and landing multicopters having a plurality of spaced-apart, electrically driven rotors, which for transporting a load each have at least one flexible element which on the one hand is connected to the relevant aircraft and on the other hand is connected or connectible to the load, according to claim 12.

Unmanned, hover-capable aircraft or aerial vehicles, what are known as UAVs (Unmanned Aerial Vehicles) or drones, which are rigidly connected to one another and co-operate with one another in order to lift loads that are too heavy for only one UAV or a smaller number of UAVs, are known in the prior art, see EP 2 818 406 A1.

In the present description the terms "aircraft", "aerial vehicle", "UAV", "MAV" (Multiactuator Aerial Vehicle) and "drone" are used synonymously, unless explicitly indicated otherwise.

Each UAV has a certain maximum specific payload that it is able to transport. If a load to be transported exceeds the specific payload, a plurality of UAVs (that is to say at least two) are able to co-operate in order to carry a heavier load. With a plurality of UAVs it is also possible to convey different shapes and/or sizes of load, for example a triangular shape or a rectangular shape.

The use of a plurality of UAVs for carrying a load also introduces a certain amount of redundancy into the resulting "delivery system", that is to say the flying load transport system, because a UAV could be defective and the other UAVs are nevertheless able to fulfil the delivery task at hand. The number of UAVs which are to carry a load of a certain weight is therefore calculated in dependence upon the weight, size and shape of the load, the delivery distance, the weather conditions and a safety factor.

EP 2 881 324 A1 teaches a method of controlling a UAV which co-operates with other UAVs in order to lift a payload that is carried by the respective UAVs via cables or holding belts. The control method applies a variable weighting to a distance between at least two UAVs in order to be able to calculate and optimise (cost) outlay for certain movements of the load.

WO 2019/079100 A1 discloses a distributed, reconfigurable aerial vehicle configuration, wherein a payload is attached to a plurality of aerial vehicles by means of a respective tether, which tether can be extendable or retractable.

US 9,422,139 B1 discloses a UAV that can operate in hover mode and lower a payload towards a delivery site.

MAZA I ET AL, "Multi-UAV Cooperation and Control for Load Transportation and Deployment", JOURNAL OF INTELLIGENT AND ROBOTIC SYSTEMS ; THEORY AND APPLICATIONS (INCORPORATING MECHATRONIC SYSTEMS ENGINEERING), KLUWER ACADEMIC PUBLISHERS, DO, (20090813), vol. 57, no. 1-4, ISSN 1573-0409, pages 417 - 449, disclose a flying load transport system,, wherein the input of a control scheme is the desired trajectory for a payload.

Here and hereinbelow, whenever mention is made of UAVs, this is always intended to include manned aircraft as well, in which, however, the flight control is affected (permanently or intermittently) not by a pilot command but automatically by a (flight) control unit of the relevant aircraft.

The term "attitude", as used in the present application, implies the orientation of a reference point (defined in a reference frame), e.g. the centre of gravity, of an object, for example of an aircraft or a (pay)load, w.r.t. another reference point (defined in a reference frame), e.g. take-off or landing point of the payload, in three-dimensional space.

The term "altitude", as used in the present application, implies a height of a reference point, e.g. the centre of gravity, of an object, for example an aircraft or a (pay)load, in a vertical axis.

Whereas the term "position", as used in the present application, defines an exact location of a reference point, e.g. the centre of gravity, of an object, e.g. of an aircraft or a (pay)load, w.r.t. another reference point, e.g. take-off or landing point of the payload, in three-dimensional space.

A disadvantage of the previously known control methods is that it is not possible to alter the attitude and/or altitude of a load being transported by aircraft without at the same time also altering the attitude and/or altitude of the aircraft. No known flight control method for a plurality of aircraft or specifically UAVs makes it possible to alter the position and/or attitude of a cargo during the flight without also affecting the altitude and/or attitude of the aircraft/UAVs.

This is a result of what is known as "under-actuation" of the aircraft in question. "Under-actuation" is a term well-known in the field of control theory, control engineering and robotics and in the present case means that no change in attitude, e.g. rolling or pitching, is possible without an associated change in position. In the case of the aircraft, a change in attitude, for example a roll or pitch inclination, will necessarily also result in a change in position, and vice versa, with the result that the position of the transported load changes, which can lead to inaccuracies in the delivery. The change in attitude of a load will be necessary, however, in certain cases, for example on uneven or sloping terrain. It can also be necessary to change a load's attitude without changing its position in some cases, e.g., handling a load in narrow spaces.

The problem underlying the invention is to define a method for controlling a plurality of hover-capable aircraft and a flying load transport system with which it is possible to alter the attitude of a load being transported by aircraft, without requiring at the same time to alter the attitude and/or altitude of the aircraft as well. This also implies that the attitude of the load can be altered independently from its position. The objective is in this way to increase the practical usability of such a method or load transport system.

That problem is solved according to the invention by a method having the features of claim 1 and by a flying load transport system having the features of claim 12.

Advantageous developments are subject matter of subsidiary claims.

In a method according to the invention for controlling a plurality of hover-capable aircraft, preferably vertical take-off and landing multicopters having a plurality of spaced-apart, electrically driven rotors, during transportation of a load, which load is carried jointly by all aircraft by means of at least one flexible element for each aircraft, wherein an attitude and/or a position of the load is altered by altering the length of at least one of the flexible elements, and wherein the attitude and/or position of the load is altered while keeping the attitude and altitude of the aircraft essentially constant.

In a flying load transport system constructed in accordance with the invention, comprising a load and a plurality of hover-capable aircraft, preferably vertical take-off and landing multicopters having a plurality of spaced-apart, electrically driven rotors, which for transporting a load each have at least one flexible element which on the one hand is connected to the relevant aircraft and on the other hand is connected or connectible to the load, and to alter the attitude and/or position of the load at least one of the aircraft has a length-altering device for altering a length of the relevant flexible element, so that the attitude and/or position of the load is altered while keeping the attitude and altitude of the aircraft essentially constant.

Here and hereinbelow, whenever mention is made of the length of a flexible element being altered (lengthened or shortened), this always means alteration of a free length of that element, that is to say a length between two fixing points. In addition, the alteration in length should be reversible, that is to say it does not mean permanently cutting the flexible element to length. The length-altering device is designed so as to be appropriate for that purpose. In other words, the length altering of the flexible element is reversible.

In the context of the invention there is accordingly proposed a flight control method for at least two UAVs or generally a method for controlling a plurality of hover-capable aircraft which co-operate in order to carry a load. The load is connected to the UAVs via flexible elements, for example cables, belts or ropes. At least one of the cables, belts or ropes is variable in length, for example by means of a length-altering device in the form of a winch or the like. Unlike the teaching of EP 2 818 406 A1, the aircraft are not rigidly connected to one another.

In the context of the application, the term "flexible" for defining the "flexible element" shall be understood in a way that said element, e.g. cable, belt or rope is bendable in both lateral axes. It should, however, not be "flexible" along their longitudinal axis.

A development of the method according to the invention provides that to alter its length the at least one flexible element is wound up or unwound by a length-altering device, especially a winch or the like.

A corresponding development of the load transport system according to the invention provides that the flexible element is in the form of a rope, belt, slack or cable and the length-altering device is in the form of a winch for the rope, belt, slack or cable.

In this way it is possible to deliver a load not only to an exact delivery point (a location or a position) but at the same time also to impart thereto an exact alignment or attitude without necessarily altering the attitude of the UAVs.

If, according to the invention, at least one flexible element can be varied in length by means of a winch or the like, the delivery process outlined above is provided with a further degree of freedom. It is then also possible to unload a load at a location at which the UAVs are unable to land. If, for example, the flexible element of a first UAV is altered in length to a greater extent than is the flexible element of a second UAV, the rotational dynamics of the load are decoupled from its translational dynamics without the position of one of the UAVs needing to be altered for that purpose. This new degree of freedom also enables a greater measure of attitude control to be achieved, which can be additionally exploited by optionally also altering the position of the UAVs.

Another advantageous development of the method according to the invention provides more degrees of freedom for altering the attitude and/or position of the load by using the winch mechanism. As an example, changing both altitude and attitude of the load can be done by either changing the length of cables or the position of the aircrafts, or both. By using both, the targeted attitude and position of the load can be achieved faster and with a higher precision.

The method according to the invention, however, provides in the first instance that the attitude and/or position of the load is altered without altering the altitude of the aircraft in space, that is to say with all the aircraft being in a substantially constant height in space. Loads can thus readily be manipulated with targeting and positioning accuracy, even in confined spatial conditions.

Another advantageous development of the method according to the invention provides that at least three aircraft are used. When more than one aircraft or UAV is used, at least two attitude dimensions and three translation dimensions (for example the position) can be altered in a controlled way. With more than two UAVs, that is to say with at least three UAVs, all the dimensions of the rigid body movement (three translational movements and three rotational movements) can be altered in a controlled way.

Yet another advantageous development of the method according to the invention provides that a plurality, preferably all, of the flexible elements are altered in length in co-ordination with one another. Accordingly, the attitude and/or position of a load can be altered flexibly.

Winches or the like advantageously employed for that purpose can, however, be used not only for altering the alignment attitude but also exclusively for altering the altitude of the load or cargo. During unloading, the flexible elements are uniformly unwound in co-ordination with one another, with the result that the cargo loses height in a controlled way, while all the UAVs are able to maintain their original altitude. They therefore need not lose height unless that is necessary. Such a configuration can be advantageous, because the amount of air swirled up by the thrust of the UAV rotors decreases with increasing distance of the UAVs from the ground. This is especially advantageous when the delivery site is located on a dusty or sandy substrate. In addition, aerodynamic interferences decrease with increasing distance between the UAVs and the ground, which can have a positive effect on the flight characteristics. Also having not only flexible elements between the UAVs and the load, but also being able to alter their length (by winding/unwinding using winches, for example) brings extra degrees of freedom, which brings more controllability to the system when counteracting to wind and gusts (especially during unloading a load).

A correspondingly advantageous development of the method according to the invention provides that all flexible elements are altered in length by the same amount.

Otherwise, a correspondingly advantageous development of the method according to the invention can provide that at least one of the flexible elements is altered in length to a greater or lesser extent than the other flexible elements in order thus also to affect the attitude of the load in a targeted way (not only its height or altitude).

Yet another advantageous development of the method according to the invention provides that a trajectory for a planned translational and rotational movement of the load is calculated and, using dynamic and kinematic models of a total system comprising aircraft, load, flexible elements and preferably the length-altering device, the aircraft and preferably the length-altering device are actuated so as to achieve that trajectory.

In this context, preferably each aircraft and its length-altering device (e.g., winch) is modelled as one system, which is responsible of providing a desired tension to the flexible element (e.g. cable, belt or rope) connected to itself in one end and to the load in another end. Tension of a flexible element is either measured from the length-altering device and/or estimated using the measurements/state estimates from each aircraft and a kinematic and dynamic model of the overall system. Each aircraft and its length-altering device has at least one Flight Control Unit (FCU) and a Winch Control Unit (WCU), where the state (e.g. rotation and rotational velocity of the winding/unwinding winch) are communicated from WCU to FCU, and desired states of the flexible element (desired tension, winch rotation, winch rotational velocity, etc) are communicated from FCU to WCU. For each aircraft and its length-altering device, both FCU and WCU are located on the same flying unit (aircraft and its length-altering device). Length of the flexible element is altered from the aircraft side (not from the load side). Each FCU (of the aircraft) communicates with each other (via wireless technology e.g. WiFi or using wires placed inside the flexible element or outside of it), in order to exchange the current state of each aircraft and its length-altering device (position, velocity, acceleration, attitude, rotational velocity, etc. of the aircraft and winch rotation, winch rotational velocity and estimated/measured tension of the flexible element). Each aircraft and its length-altering device receives a desired load trajectory (load position, velocity, attitude, etc.), and using kinematics and dynamic model of the overall system and the knowledge on the states of the other aircraft and their length-altering devices, each aircraft and its length-altering device reacts (by applying necessary actuator commands, e.g. rotor set velocities in case of multicopters and wind/unwind command for the winches) in a way that flexible elements (cable, belt or rope) are in desired tensions. These tensions are the deriving forces of the load, which eventually accelerates it and results in 3D (translational and rotational) motion in the desired direction (for following the trajectory).

Generally speaking, each length-altering device preferably comprises electronics (i.e., a control unit) as well, which has sensors and a small control unit. This control unit is responsible only of making sure that the desired amount of flexible element is wound or unwound. It controls the rotation and change of rotation (and tension on the cable if measurable or estimated) of the winches according to a corresponding embodiment. An indication of a desired amount of rotation (and desired amount of change of rotation and if available desired tension) of the flexible elements preferably comes from the control unit of the aircraft, to which this length-altering device is attached.

Moreover, the control unit of an aircraft preferably communicates with this small control unit all the time. These small control units preferably do not communicate directly with control units of the other aircraft or with the small control units of other length-altering devices of the other aircraft; but they communicate via the control unit of the aircraft, to which their length-altering device is attached.

A corresponding development of the load transport system according to the invention provides that control units of the aircraft are designed and configured to calculate and track a trajectory for a planned translational and rotational movement of the load using dynamic and kinematic models of the total system comprising load, flexible elements, the length-altering devices and the aircraft themselves, in order to actuate the aircraft and the at least one length-altering device so as to achieve that trajectory and state (measured/estimated) of each aircraft (e.g. position, velocity, acceleration, attitude, rotational velocity) and the length-altering device (winch rotation, winch rotational velocity and estimated/measured tension of the flexible element).

A corresponding development of the method according to the invention can also provide that each aircraft is considered as a kind of separate drive which is connected to the load by a flexible element and preferably the length-altering device, wherein a position and attitude of each aircraft is controlled in such a way that a tension is generated in the respective flexible element, which tension is required in order to bring the load into a desired attitude and position. With this design, one can pave the way of considering new systems/greater systems, which utilize independently controlled aircraft as its actuators.

In a development of the invention, therefore, the desired position and attitude of the aircraft as well as the length of the respective flexible element (or the rotated position of each length-altering device or winch) can be a function of the translational and rotational state of the load, its physical properties, for example its mass and its moment of inertia, and the physical properties of the flexible elements, for example their mass. In other words: the (desired) state and the physical properties of the load as well as, in addition, the physical properties of the flexible elements determine the position and attitude of the aircraft as well as the length of the respective flexible element.

Considering the load as one system, whose actuators are some flexible elements, the position and the attitude of the load is "manipulated/changed" via a tension vector applied by each flexible element to the load. This vector (as any physical 3D vector) has the information of the magnitude of the tension (by 2-norm of the vector) and the direction of this tension (in 3D). From planned trajectories (position, velocity, acceleration in both translational and rotational motion and with more derivatives if available, e.g. jerk and snap), using the dynamics (e.g. a second order physical model) of the load and the flexible elements, and the location of the connection points of each flexible elements (and using the current state of the load and each aircraft and its length altering device), one can determine what should be the tension on each flexible element (magnitude and the direction) in order to track the planned load trajectories. For this, one needs to know the current state of the load. This is estimated using the states of each aircraft and its length altering device and the overall system dynamics and kinematics (or can still be measured using, e.g., a combination of IMU (Inertial Measurement Unit), barometer, and if available GNSS, RADAR, LIDAR, and optical sensors located on the load (or a mechanical frame carries the load). The state of each aircraft and its length altering device is measured/estimated with sensors onboard of each UAV, e.g. IMU, barometer, GNSS and if available RADAR, LIDAR and optical sensors and rotational position/velocity measurement unit of the length-altering device e.g. an encoder. Then each individual aircraft and its length altering device system is responsible for providing a tension (magnitude and direction in 3D) to the flexible element it is connected to. i.e. each aircraft moves in space and length altering device winds/unwinds the flexible elements together in a way that desired tensions are acquired on the flexible elements. Hence, desired load trajectories are translated to desired flexible element tensions (magnitude and the direction), which is to be tracked by related aircraft and its length altering device. In other words, the motion of each aircraft and its length-altering device is computed using the kinematics/dynamics of the overall system, state measurement/estimate of the each aircraft and its length altering device and state estimate of the load, such that specific tensions (in magnitude and 3D direction) are applied to the flexible elements, which eventually move the attached load in a desired way. These computations are performed in the flight control unit of each aircraft and its length-altering device in a decentralized way.

An especially advantageous development of the method according to the invention provides that all measured values necessary for actuating the aircraft are obtained by sensors on board the aircraft, especially measured values relating to position, velocity, accelerations, attitude and rotational velocities as well as a respective length of the flexible elements and preferably a respective tension of the flexible elements. Such sensors are routinely already present. The (laborious) provision of sensors on the load is accordingly unnecessary (but can be used if available).

A similarly advantageous development of the method according to the invention can provide that each aircraft itself controls its own translational and rotational movement and a length of its flexible element in order to achieve the desired trajectory of the load.

Correspondingly, a development of the load transport system according to the invention provides that each aircraft is designed to control its own translational and rotational movement and preferably a length of its flexible element in order to achieve the trajectory of the load.

Advantageously, in the context of the method an exchange of data takes place between control units of the aircraft using either wireless communication protocol (e.g. WiFi) or wired communication (e.g. with wires inside or around the flexible elements). Each control units exchange the state (translational positions, velocities and accelerations in 3D, attitude (quaternions, Euler angles or a rotation matrix) and rotational velocities of an aircraft body frame, rotation and rotational velocity of the length-altering device) of their own unit (aircraft and length altering device), their own estimate of the state of the load and commanded (and measured, if available) actuator commands (e.g. in case of multirotor aircraft the set RPM commands).

Correspondingly, another development of the load transport system according to the invention provides that the aircraft are in communicating connection with one another, preferably wirelessly, for an exchange of data between control units of the aircraft.

It has already been pointed out that the air swirled up close to the ground by the thrust of the aircraft rotors becomes less significant with increasing distance of the aircraft from the ground. Lowering the transported load by (uniformly) lengthening the flexible elements is especially advantageous when the delivery site is located on e.g. a dusty or sandy substrate. In addition, aerodynamic interferences decrease with increasing distance between the aircraft and the ground.

If the load is connected to the aircraft *via* flexible elements, such as cables, belts or holding ropes, it is also possible to deliver a load to a location in the vicinity of which one or more of the aircraft are unable to fly or land, for example through a small gap, a window, an area with pedestrians or people, a landing site on water, *etc.* It is therefore also possible to unwind a load to a delivery location without the aircraft having to actually land. This lowers the risk for human(s) on the landing site. Further, it decreases ground effects as well as aerodynamic interferences which therefore increases the safety of the overall system (aircraft + load) due to e.g. swirled up dust or sand, etc.

As already mentioned, it is not necessary to attach a sensor to the load. All necessary sensors are preferably arranged in the UAVs and allow full assessment of the state of the UAV (in respect of position, velocity, acceleration, rotations and rotational velocity). There are especially used at least one inertial measurement unit, at least one satellite navigation unit (e.g. GPS) and at least one altimeter. Some or all UAVs can additionally be equipped with lidar, radar, an (optical) camera and/or ultrasound sensors. In addition, each length-altering device preferably has at least one sensor for measuring the length of the wound-up or unwound flexible element, for example an encoder (rotary encoder). It is possible in each case to add a further sensor in order to measure the tension at the flexible elements, or to estimate such tension using a kinematic and dynamic model of the total system.

In a corresponding development of the load transport system according to the invention, each aircraft has sensors for determining all the measured values necessary for actuating a relevant aircraft, especially sensors for position, velocity, rotations and rotational velocities as well as a respective length of the flexible elements and preferably a respective tension of the flexible elements, especially an inertial measurement unit, a satellite navigation unit and an altimeter. An inertial measurement unit is a physical combination of a plurality of inertial sensors, such as acceleration sensors and angular rate sensors. It constitutes the sensor-based measuring unit of an inertial navigation system. Especially in the case of unmanned aerial vehicles (UAVs) it serves for the feedback-controlled stabilisation of the aircraft in space.

In another development of the load transport system according to the invention, at least one aircraft may have lidar, radar, at least one optical camera and/or at least one ultrasound sensor. These sensors are all used for at least translational state estimation of the overall system (and the aircraft). Translational states (e.g. positions and velocities) are important, since deviation from a desired translational state generates tensions on the flexible elements. Using lidar, radar, ultrasound sensors and cameras increase the precisions in the estimation in these states. However, implementing all these sensors in each aircraft increases the weight of each aircraft and the system costs. They can be implemented at least in one of them (or distribute all these sensors between different aircraft), and using the kinematics/dynamics and other available state measurements we can improve the translational state estimation of the other aircraft as well.

As already mentioned, each aircraft controls its own translational and rotational movement, as well as the movement of the flexible element extending therefrom, by means of its own controller and the associated sensors. All corresponding controllers (aircraft flight control units) co-operate in order to perform the necessary aircraft and (without limitation) winch movements that together give rise to a desired payload movement.

Here and in the remainder of the text, whenever reference is made to a "winch", the term always also includes other possible ways of realising a change in the length of the flexible elements, for example a reel or the like.

In principle it is possible to use robot arms or the like instead of the flexible elements proposed herein (ropes, belts or cables). This increases the range of possible movements that can be realised up to some extent (e.g. increased range in rotations of the load), but reduces the payload on account of the higher inherent weight and limits some of the movements (e.g. in this case one cannot lower the load without needing the necessity of altitude change of the aircraft, if winding/unwinding is not possible).

Further properties and advantages of the invention will be apparent from the following description of exemplary embodiments with reference to the drawing.

Figure 1    shows various possible ways of altering the attitude and/or position of a load which is being transported by a plurality of UAVs;

Figure 2    shows a possible way of altering the height of a cargo which is being transported by a plurality of UAVs;

Figure 3    illustrates the decoupling of inclined movement and horizontal movement of an under-actuated system comprising a plurality of UAVs;

Figure 4    shows a first application example for the flying load transport system;

Figure 5    shows a second application example for the flying load transport system;

Figure 6    shows a third application example for the flying load transport system;

Figure 7    shows a fourth application example for the flying load transport system;

Figure 8    shows a fifth application example for the flying load transport system;

Figure 9    is a block diagram of the control and communication logic of the load transport system;

Figure 10   illustrates further details of the control and communication logic of aircraft systems and aircraft flight controller according to Figure 9; and

Figure 11   shows details of the control and communication blocks in an aircraft system according to Figure 10.

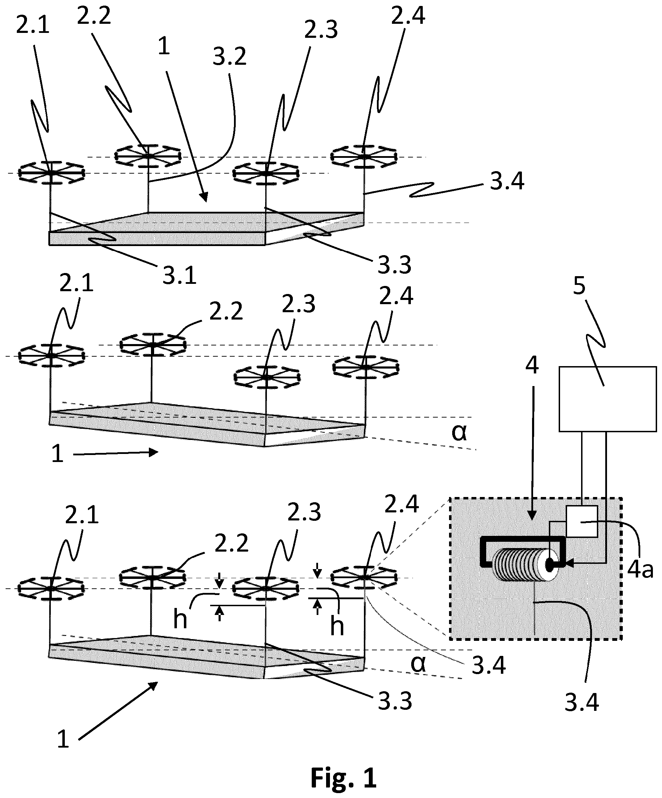

Figure 1 shows, in three illustrations, how the attitude and position of a load 1, which is being transported jointly by a plurality of aircraft in the form of UAVs 2.1-2.4, can be altered at the same time by the use of flexible elements 3.1-3.4 in the form of cables, belts or ropes and corresponding winches 4, of which only one is shown explicitly. The winches 4 are in control communication with a respective (flight) control unit 5 of the UAVs 2.1-2.4, as shown symbolically. Reference sign 4a indicates a control unit of a length-altering device equipped with at least a sensor in the form of a rotary encoder which is connected to the control unit 5 and which serves to determine an (unrolled) length of the relevant flexible element 3.1-3.4 and to deliver a corresponding sensor signal to the control unit 5. Optionally, control unit 4a is equipped with another sensor, which measures the tension on the flexible element connected to winches 4.

The illustration at the top shows an example of a set-up having four UAVs 2.1-2.4 which each have such a flexible element 3.1-3.4. The flexible elements 3.1-3.4 are each connected to one of the UAVs 2.1-2.4 and to a corner of the - without limitation thereto - flat, parallelepipedal load 1. All UAVs 2.1-2.4 fly (hover) at the same height; the load 1 is horizontally aligned.

The illustration in the centre shows how the attitude and position of the load 1 can be altered at the same time by altering the UAV position. The UAVs 2.3 and 2.4 have uniformly reduced their altitude relative to the other UAVs 2.1 and 2.2. In the case of the load 1, this results in an angle of inclination $\alpha$ relative to the horizontal.

The illustration at the bottom shows how the same change in the attitude and position of the load 1 (angle of inclination $\alpha$) is affected using the winches 4. The flexible elements 3.3 and 3.4 have been lengthened by the same amount h by unwinding from the relevant winch 4 as stipulated by the associated control unit or controller 5. In this way it is possible to avoid altering the altitude of the UAVs 2.3, 2.4 (see the illustration at the top), while still being able to tilt the load 1 with an angle $\alpha$ to the horizontal axis).

In addition, the control units 5 of the UAVs 2.1-2.4 are preferably designed and configured to calculate a trajectory for a planned translational and rotational movement of the load 1, either individually or jointly. For that purpose, dynamic and kinematic models of the total system comprising the load 1, the flexible elements 3.1-3.4, the winch(es) 4 and the aircraft 2.1-2.4 can be used in order to actuate the aircraft 2.1-2.4 and the winch(es) 4 so as to achieve that trajectory. For that purpose, the control units 5 of the UAVs 2.1-2.4 can be in communicating and data-transmitting connection, preferably wirelessly.

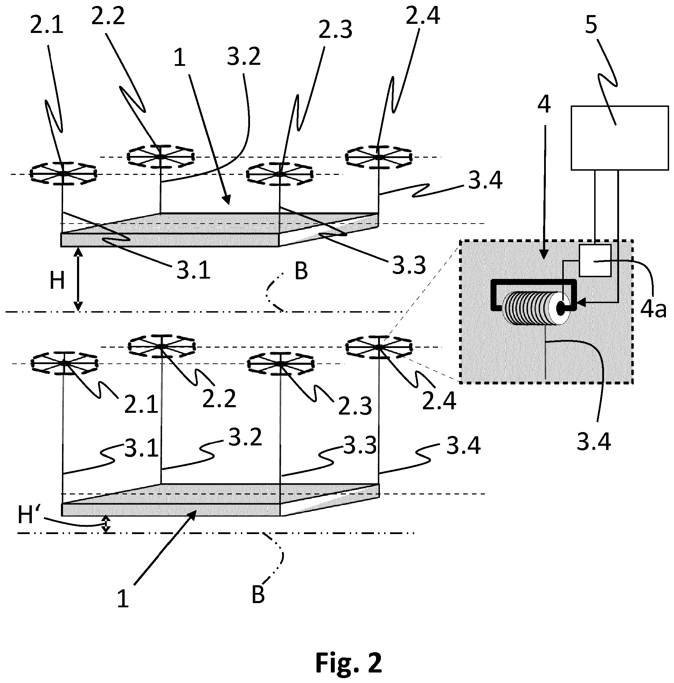

Figure 2 shows that the winches 4 can be used not only for altering the attitude of the load 1, but also for altering the altitude of the load 1 relative to a reference plane, such as the ground B. In the illustration at the top, the load 1 is located at a height H above the ground B; in the illustration at the bottom the height above the ground B is only H', H' < H. During unloading, all flexible elements 3.1-3.4 are uniformly unwound, with the result that the load 1 loses height in a controlled way. It should be noted that all UAVs 2.1-2.4 maintain their original altitude. This can be advantageous for the reasons described hereinabove.

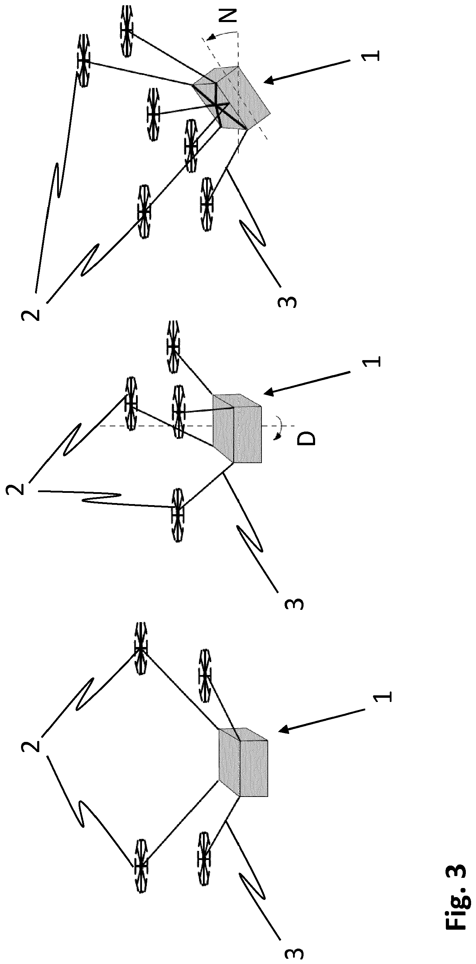

Figure 3 shows, with reference to three drawings, some examples of the manoeuvrability of the proposed load transport system using a plurality of UAVs 2 and flexible elements, only some of which are explicitly indicated by reference sign 3. Many UAVs 2 having hovering capability are what are known as "under-actuated" systems, as has been defined hereinabove. This means that they move horizontally when they are inclined, or they have to be inclined if they are to move horizontally. Those two movements are "coupled". By the use of flexible elements 3 for load transportation, those movements are decoupled, so that the load 1 can be tilted without the horizontal position of the UAVs 2 being altered (which prevents an unintentional change in the position of the load), see the illustration on the right in Figure 3.

More specifically, the leftmost drawing is a generic one. The middle drawing shows that the load is doing a "yaw" turn due to the aircraft pulling the cables accordingly. If load was rigidly attached, then this could only be done by "yaw" turn of the aircraft. Such aircraft have low yaw authority, since the yaw torques usually are generated due to the aerodynamic drag torques and difference between rotor RPMs. Hence, with the present design one can perform faster, more agile and more stable "yaw" turns of the load. The rightmost drawing shows that the orientation of the load is altered independently from its position: something one can achieve only when position and orientation of the load is decoupled, which is what the proposed design can provide.

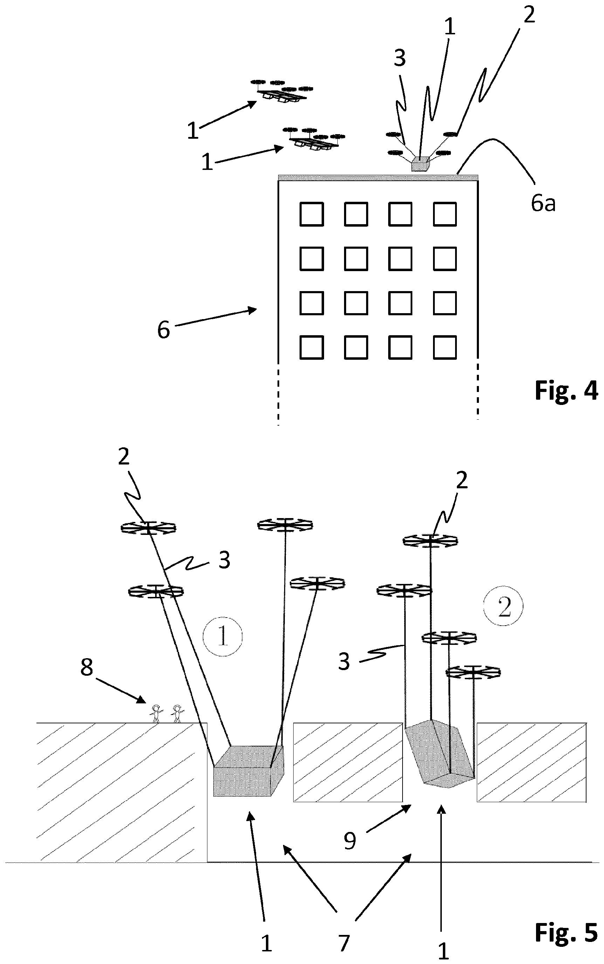

Figure 4 shows a first important application example for the proposed load transport system in the field of building construction (high-rise building), in which a load 1 that is too heavy for one UAV 2 is being transported by a plurality of UAVs 2 using flexible elements 3 to an elevated destination, here the roof 6a of a high-rise building 6.

Figure 5 shows on the left at ① how a load 1 is delivered to a landing site 7 which is unsuitable for being approached by UAVs 2, for example because people 8 are in the vicinity. The right-hand side shows the case where the load 1 is to be turned on account of the restricted access opening 9 (at ②).

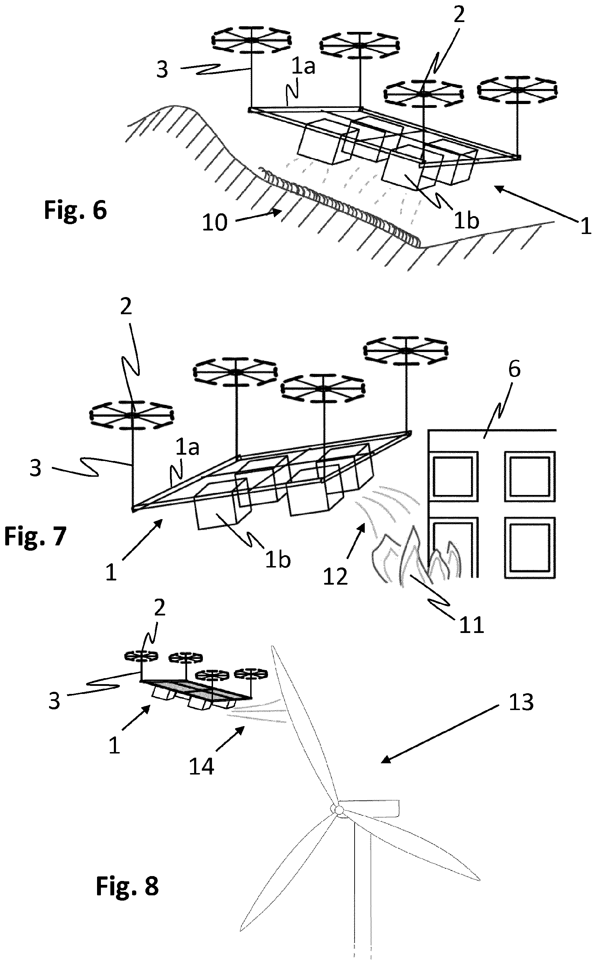

Figure 6 shows a further application example for the proposed load transport system in the field of (precision) agriculture when the terrain 10 is sloping. The proposed load transport system comprises a load 1, which by way of example has a frame structure 1a and a plurality of part-loads 1b, for example seed or fertiliser containers (not all having reference signs), fixed to the frame structure 1a. It can hover on the spot and the load 1 or the frame structure 1a can be tilted in accordance with the contours of the terrain (relief), without resulting in a change in the position of the entire load transport system.

According to Figure 7 the proposed load transport system can be used for extinguishing a fire 11 in a tall building 6, the load transport system acting as it were as a "flying fire extinguisher" which carries as its load a sufficient amount of extinguishing agent together with a discharge device. It can remain in a fixed position while the extinguishing agent 12 is applied to the fire 11, for example by spraying, at an optimum angle of inclination.

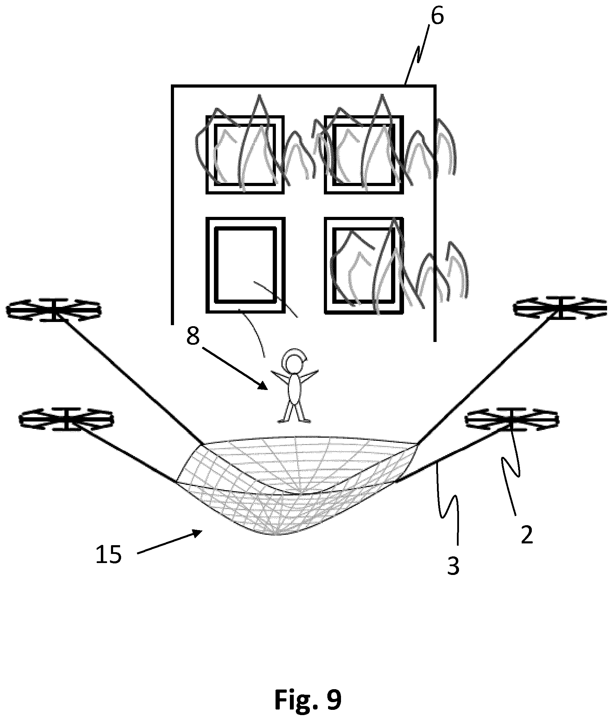

According to Figure 8 the proposed load transport system can also be used for cleaning and de-icing tall structures, for example windpower systems 13 (onshore or offshore), as shown. For that purpose, as the load 1 *inter alia* a suitable de-icing or cleaning agent is being transported and discharged (reference sign 14). According to Figure 9, the proposed load transport system can also be used for save and rescue tasks, e.g., rescuing people 8 from a building 6 using a net 15 between the aircraft (UAVs) 2.

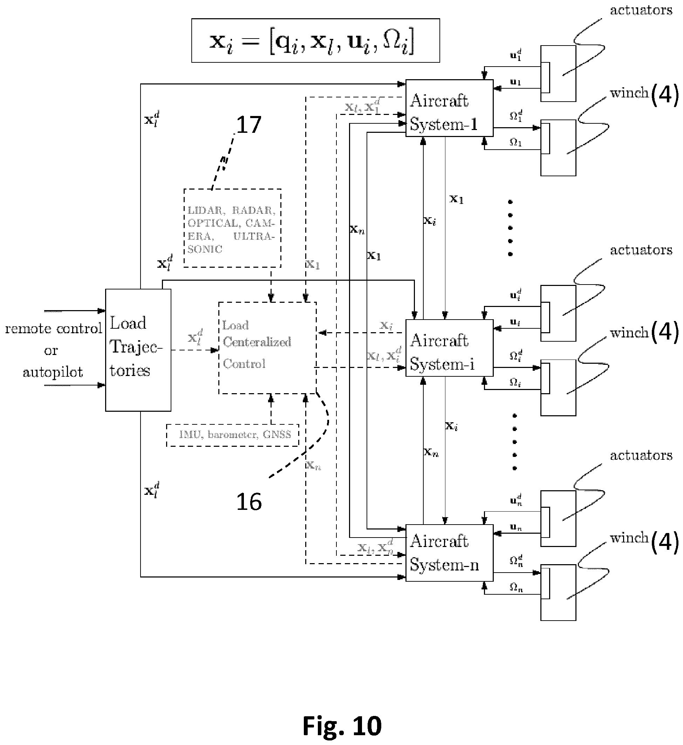

Figure 10 shows a block diagram of the control and communication of an embodiment the load transport system. Either a human pilot via remote control or an autopilot commands the desired trajectories of the load.

These desired trajectories ($x_i^d$, which comprise the load's desired 3D positions and attitudes, translational and rotational velocities, translational and rotational accelerations and higher order of derivatives of those, if available) are sent to each aircraft system, denoted "Aircraft System-i" (i = 1,...,n). Each aircraft system communicates with the other aircraft systems by sending their state information (denoted $x_i$) and by receiving state information from all the other aircraft systems. Said state information comprises 3D positions and attitude, translational and rotational velocities of the i-th aircraft $q_i$, state of the load $x_l$, actuator commands of the i-th aircraft $u_i$, and the state of the corresponding i-th winch $\Omega_i$, for i = 1,... ,n, i.e., for all aircraft. If available, a controller unit (processor, "Load Centralized Control") 16 is placed in the same frame to which the load is attached, which controller unit 16 receives measurements from different sensors 17 placed at the same frame (e.g. IMU, barometer, GNSS, LIDAR, RADAR, Optical sensors, Camera, Ultrasonic sensors) and the desired load trajectories $(x_l^d)$. Controller unit 16 also receives the states of all aircraft systems ($x_i$). It sends the desired aircraft system states $x_i^d$ and the current load state $x_l$ to the aircraft systems. Each aircraft system has a specific number of actuators and a winch 4. Desired actuator commands are depicted as $u_i^d$ and the measured actuator commands as $u_i$. Desired winch states are depicted as $\Omega_i^d$ and the measured or estimated winch states as $\Omega_i$. Winch states include, e.g., rotation of the winch, its rotational velocity and, if available, tension on the cable 3 (cf. above).

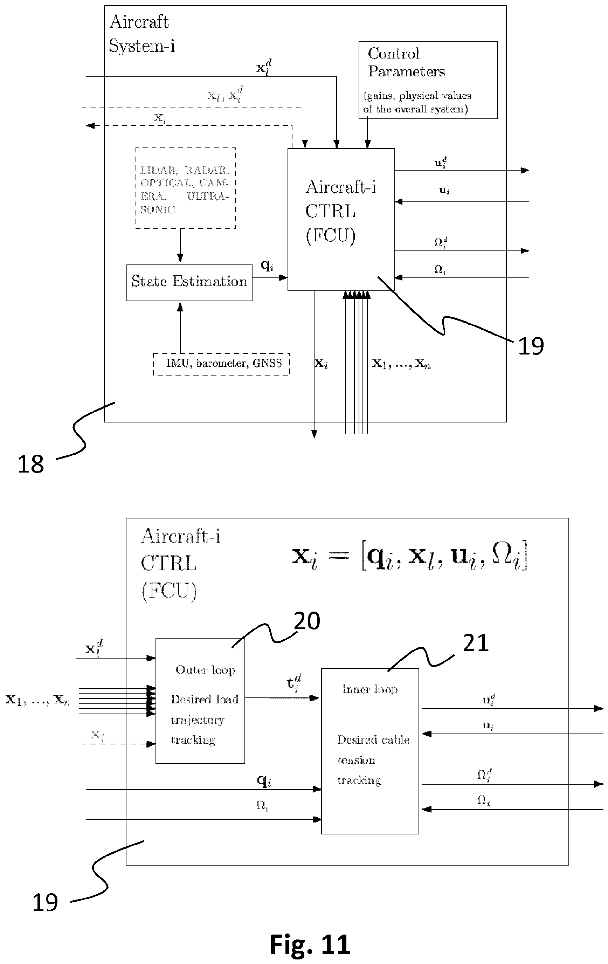

Figure 11 shows details of the individual control and communication blocks in an aircraft system according to Figure 10. At the top, a central controller block 18 of a given aircraft system-i is shown, which receives aircraft states $q_i$, desired load trajectories $x_l^d$ and the states of all aircraft systems ($x_1,...,x_n$) as well as $u_i$ and $\Omega_i$ (cf. above). This block 18 outputs the state of the corresponding aircraft system $x_i$ as well as $u_i^d$ and $\Omega_i^d$ (cf. above). At the bottom, details of an aircraft controller (flight control unit) 19 as comprised in block 18 are depicted. An outer loop controller 20 receives desired load trajectories $(x_l^d)$ and the overall aircraft system states ($x_1,...,x_n$) and outputs a 3D desired tension vector $t_i^d$. This is the desired tension on a cable (cf. above) attached to the i-th aircraft system. An inner loop controller 21 receives this desired tension together with 3D positions and attitude, translational and rotational velocities of the i-th aircraft $q_i$ and the measured or estimated winch states $\Omega_i$. Moreover, it receives measured actuator commands $u_i$ and measured or estimated winch states $\Omega_i$. Finally, inner loop controller 21 outputs the desired actuator and winch commands, $u_i^d$ and $\Omega_i^d$ .

**Claims**

1. Method for controlling a plurality of hover-capable aircraft (2; 2.1-2.4), preferably vertical take-off and landing multicopters having a plurality of spaced-apart, electrically driven rotors, during transportation of a load (1), which load (1) is carried jointly by all aircraft (2; 2.1-2.4) by means of at least one flexible element (3; 3.1-3.4) for each aircraft, wherein an attitude and/or a position of the load (1) is altered by altering a length of at least one of the flexible elements (3; 3.1-3.4);
   **characterized in that**
   the attitude and/or position of the load (1) is altered while keeping the attitude and altitude of the plurality of aircraft (2; 2.1-2.4) essentially constant.

2. Method according to claim 1, wherein to alter its length the at least one flexible element (3; 3.1-3.4) is wound up or unwound by a length-altering device (4), especially a winch or the like.

3. Method according to claim 1 or 2, wherein the attitude of the load (1) is altered without altering the altitude of the aircraft (2; 2.1-2.4) in space.

4. Method according to any one of claims 1 to 3, wherein at least three aircraft (2; 2.1-2.4) are used.

5. Method according to any one of claims 1 to 4, wherein a plurality, preferably all, of the flexible elements (3; 3.1-3.4) are altered in length in co-ordination with one another.

6. Method according to any one of claims 1 to 5, wherein all flexible elements (3; 3.1-3.4) are altered in length by the same amount.

7. Method according to any one of claims 1 to 5, wherein at least one of the flexible elements (3; 3.1-3.4) is altered in length to a greater or lesser extent than are the other flexible elements (3; 3.1-3.4).

8. Method according to any one of claims 1 to 7, wherein a trajectory for a planned translational and rotational movement of the load (1) is calculated and, using dynamic and kinematic models of a total system which comprises the load (1), the flexible elements (3; 3.1-3.4), preferably the length-altering device (4) according to claim 2, and the aircraft (2; 2.1-2.4), the aircraft (2; 2.1-2.4) and preferably the length-altering device (4) are actuated so as to achieve that trajectory.

9. Method according to claim 8, wherein each aircraft (2; 2.1-2.4) is connected to the load (1) *via* a flexible element (3; 3.1-3.4) and preferably a length-altering device (4) according to claim 2, wherein a position and attitude of each aircraft (2; 2.1-2.4) is controlled in such a way that a tension is generated in the respective flexible element (3; 3.1-3.4), which tension is required in order to bring the load (1) into a desired attitude.

10. Method according to claim 8 or 9, wherein all measured values necessary for actuating the aircraft (2; 2.1-2.4) are obtained by sensors on board the aircraft (2; 2.1-2.4), especially measured values relating to position, velocity, acceleration, attitude, rotations and rotational velocity as well as a respective length and velocity of the flexible elements (3; 3.1-3.4) and preferably a respective tension of the flexible elements (3; 3.1-3.4).

11. Method according to any one of claims 8 to 10, wherein each aircraft (2; 2.1-2.4) itself controls its own translational and rotational movement and a length of its flexible element (3; 3.1-3.4) in order to achieve the trajectory.

12. Flying load transport system, comprising a load and a plurality of hover-capable aircraft (2; 2.1-2.4), preferably vertical take-off and landing multicopters having a plurality of spaced-apart, electrically driven rotors, which for transporting a load (1) each have at least one flexible element (3; 3.1-3.4) which on the one hand is connected to the relevant aircraft (2; 2.1-2.4) and on the other hand is connected or connectible to the load (1), wherein to alter an attitude and/or position of the load (1) at least one, preferably two, especially preferred all of the aircraft (2; 2.1-2.4) has/have a length-altering device (4) for altering a length of the relevant flexible element (3; 3.1-3.4),
   **characterized in that**
   the attitude and/or position of the load (1) is altered while keeping the attitude and altitude of the aircraft (2; 2.1-2.4) essentially constant.

13. Flying load transport system according to claim 12, wherein the flexible element (3; 3.1-3.4) is in the form of a rope, belt, slack or cable and the length-altering device (4) is in the form of a winch for the rope, belt, slack or cable.

**14.** Flying load transport system according to claim 12 or 13, wherein control units (5) of the aircraft (2; 2.1-2.4) are designed and configured to calculate a trajectory for a planned translational and rotational movement of the load (1), either individually or jointly, and using dynamic and kinematic models of a total system comprising load (1), flexible elements (3; 3.1-3.4), the length-altering device (4) and the aircraft (2; 2.1-2.4) themselves, in order to actuate the aircraft (2; 2.1-2.4) and the at least one length-altering device (4) so as to achieve that trajectory.

**15.** Flying load transport system according to any one of claims 12 to 14, wherein each aircraft (2; 2.1-2.4) is designed to control its own translational and rotational movement and preferably a length of its flexible element (3; 3.1-3.4) in order to achieve the trajectory.

**16.** Flying load transport system according to any one of claims 12 to 15, wherein the aircraft (2; 2.1-2.4) each have sensors for determining measured values necessary for actuating a relevant aircraft (2; 2.1-2.4), especially sensors for position, velocity, acceleration, attitude, rotations and rotational velocities as well as a respective length and velocity of the flexible elements (3; 3.1-3.4) and preferably a respective tension of the flexible elements (3; 3.1-3.4).

**17.** Flying load transport system according to any one of claims 12 to 16, wherein at least one aircraft (2; 2.1-2.4) has at least one of inertial measurement unit, GPS or the like, altimeter and preferably at least one of lidar, radar, an optical camera and/or ultrasound sensor on one of the aircrafts or distributed on different aircrafts.

**18.** Flying load transport system according to any one of claims 12 to 17, wherein the aircraft are in communicating connection with one another, preferably wirelessly, for an exchange of data between control units (5) of the aircraft (2; 2.1-2.4).

**Patentansprüche**

**1.** Verfahren zum Steuern einer Mehrzahl schwebefähiger Flugzeuge (2; 2.1-2.4), vorzugsweise Senkrechtstart- und -lande-Multicopter, die eine Mehrzahl voneinander beabstandeter, elektrisch angetriebener Rotoren haben, während des Transports einer Last (1), wobei die Last durch alle Flugzeuge (2; 2.1-2.4) gemeinsam mittels mindestens eines flexiblen Elements (3; 3.1-3.4) für jedes Flugzeug getragen wird, wobei eine Lage und/oder eine Position der Last (1) dadurch geändert wird, dass eine Länge mindestens eines der flexiblen Elemente (3; 3.1-3.4) geändert wird; **dadurch gekennzeichnet, dass**

die Lage und/oder Position der Last (1) geändert wird, während die Fluglage und -höhe der Mehrzahl der Flugzeuge (2; 2.1-2.4) im Wesentlichen konstant gehalten wird.

**2.** Verfahren gemäß Anspruch 1, wobei zum Ändern seiner Länge das mindestens eine flexible Element (3; 3.1-3.4) durch eine Längenänderungseinrichtung (4), insbesondere eine Winde oder dergleichen, aufgewickelt oder abgewickelt wird.

**3.** Verfahren gemäß Anspruch 1 oder 2, wobei die Lage der Last (1) geändert wird, ohne dass die Flughöhe der Flugzeuge (2; 2.1-2.4) im Raum geändert wird.

**4.** Verfahren gemäß einem der Ansprüche 1 bis 3, wobei mindestens drei Flugzeuge (2; 2.1-2.4) verwendet werden.

**5.** Verfahren gemäß einem der Ansprüche 1 bis 4, wobei eine Mehrzahl der, vorzugsweise alle, flexiblen Elemente (3; 3.1-3.4) in Koordination miteinander in der Länge geändert werden.

**6.** Verfahren gemäß einem der Ansprüche 1 bis 5, wobei alle flexiblen Elemente (3; 3.1-3.4) um die gleiche Menge in der Länge geändert werden.

**7.** Verfahren gemäß einem der Ansprüche 1 bis 5, wobei mindestens eines der flexiblen Elemente (3; 3.1-3.4) um einen größeren oder kleineren Grad als die anderen flexiblen Elemente (3; 3.1-3.4) in der Länge geändert wird.

**8.** Verfahren gemäß einem der Ansprüche 1 bis 7, wobei eine Trajektorie für eine geplante Translations- oder Drehbewegung der Last (1) berechnet wird und unter der Verwendung dynamischer und kinematischer Modelle eines Gesamtsystems, das die Last (1), die flexiblen Elemente (3; 3.1-3.4), vorzugsweise die Längenänderungseinrichtung (4) gemäß Anspruch 2, und die Flugzeuge (2; 2.1-2.4) umfasst, die Flugzeuge (2; 2.1-2.4) und vorzugsweise die Längenänderungseinrichtung (4) betätigt werden, um so diese Trajektorie zu erreichen.

**9.** Verfahren gemäß Anspruch 8, wobei jedes Flugzeug (2; 2.1-2.4) mit der Last (1) über ein flexibles Element (3; 3.1-3.4) und vorzugsweise eine Längenänderungseinrichtung (4) gemäß Anspruch 2 verbunden ist, wobei eine Position und Lage eines jeden Flugzeugs (2; 2.1-2.4) in einer solchen Weise gesteuert wird, dass eine Spannung in dem entsprechenden flexiblen Element (3; 3.1-3.4) erzeugt wird, wobei die Spannung benötigt wird, um die Last (1) in eine gewünschte Lage zu bringen.

**10.** Verfahren gemäß Anspruch 8 oder 9, wobei alle Messwerte, die zum Betätigen der Flugzeuge (2; 2.1-2.4) benötigt werden, durch Sensoren erhalten werden, die an Bord der Flugzeuge (2; 2.1-2.4) sind, insbesondere Messwerte, die sich auf Position, Geschwindigkeit, Beschleunigung, Lage, Drehungen und Drehgeschwindigkeit sowie auf eine jeweilige Länge und Geschwindigkeit der flexiblen Elemente (3; 3.1-3.4) und vorzugsweise eine jeweilige Spannung der flexiblen Elemente (3; 3.1-3.4) beziehen.

11. Verfahren gemäß einem der Ansprüche 8 bis 10, wobei jedes Flugzeug (2; 2.1-2.4) selbst seine eigene Translations- und Drehbewegung und eine Länge seines flexiblen Elements (3; 3.1-3.4) steuert, um die Trajektorie zu erreichen.

12. Fluglasttransportsystem, umfassend eine Last und eine Mehrzahl von schwebefähigen Flugzeugen (2; 2.1-2.4), vorzugsweise Senkrechtstart- und -lande-Multicopter, die eine Mehrzahl voneinander beabstandeter, elektrisch angetriebener Rotoren haben, die zum Transportieren einer Last (1) jeweils mindestens ein flexibles Element (3; 3.1-3.4) haben, das auf der einen Seite mit dem betreffenden Flugzeug (2; 2.1-2.4) verbunden ist und auf der anderen Seite mit der Last (1) verbunden oder verbindbar ist, wobei zum Ändern einer Lage und/oder einer Position der Last (1) mindestens eines, vorzugsweise zwei, besonders bevorzugt alle Flugzeuge (2; 2.1-2.4) eine Längenänderungseinrichtung (4) zum Ändern einer Länge des betreffenden flexiblen Elementes (3; 3.1-3.4) hat/haben;
**dadurch gekennzeichnet, dass**
die Lage und/oder Position der Last (1) geändert wird, während die Fluglage und -höhe der Flugzeuge (2; 2.1-2.4) im Wesentlichen konstant gehalten wird.

13. Fluglasttransportsystem gemäß Anspruch 12, wobei das flexible Element (3; 3.1-3.4) in der Form eines Seils, Riemens, Hängeseils oder Drahtseils ist und die Längenänderungseinrichtung (4) in der Form einer Winde für das Seil, den Riemen, das Hängeseil oder das Drahtseil ist.

14. Fluglasttransportsystem gemäß Anspruch 12 oder 13, wobei Steuerungseinheiten (5) der Flugzeuge (2; 2.1-2.4) dazu konstruiert und konfiguriert sind, eine Trajektorie für eine geplante Translations- und Drehbewegung der Last (1) entweder einzeln oder gemeinsam und unter der Verwendung dynamischer und kinematischer Modelle eines Gesamtsystems zu berechnen, das die Last (1), flexible Elemente (3; 3.1-3.4), die Längenänderungseinrichtung (4) und die Flugzeuge (2; 2.1-2.4) selbst umfasst, um die Flugzeuge (2; 2.1-2.4) und die mindestens eine Längenänderungseinrichtung (4) zu betätigen, um so die Trajektorie zu erreichen.

15. Fluglasttransportsystem gemäß einem der Ansprüche 12 bis 14, wobei jedes Flugzeug (2; 2.1-2.4) dazu konstruiert ist, seine eigene Translations- und Drehbewegung und vorzugsweise eine Länge seines flexiblen Elements (3; 3.1-3.4) zu steuern, um die Trajektorie zu erreichen.

16. Fluglasttransportsystem gemäß einem der Ansprüche 12 bis 15, wobei die Flugzeuge (2; 2.1-2.4) jeweils Sensoren zum Bestimmen von Messwerten haben, die zum Betätigen eines betreffenden Flugzeugs (2; 2.1-2.4) benötigt werden, insbesondere Sensoren für Position, Geschwindigkeit, Beschleunigung, Lage, Drehungen und Drehgeschwindigkeiten sowie für eine jeweilige Länge und Geschwindigkeit der flexiblen Elemente (3; 3.1-3.4) und vorzugsweise eine jeweilige Spannung der flexiblen Elemente (3; 3.1-3.4).

17. Fluglasttransportsystem gemäß einem der Ansprüche 12 bis 16, wobei mindestens ein Flugzeug (2; 2.1-2.4) mindestens eine aus einer Trägheits-Messeinheit, GPS oder dergleichen, Altimeter und vorzugsweise mindestens eines aus Lidar, Radar, einer optischen Kamera und/oder Ultraschallsensor an einem der Flugzeuge oder verteilt auf verschiedene Flugzeuge hat.

18. Fluglasttransportsystem gemäß einem der Ansprüche 12 bis 17, wobei die Flugzeuge für einen Austausch von Daten zwischen Steuereinheiten (5) der Flugzeuge (2; 2.1-2.4) in vorzugsweise drahtloser Kommunikationsverbindung miteinander sind.

**Revendications**

1. Procédé pour commander une pluralité d'aéronefs capables de vol stationnaire (2 ; 2.1-2.4), de préférence de multicoptères à décollage et atterrissage verticaux ayant une pluralité de rotors espacés, commandés électriquement, pendant le transport d'une charge (1), laquelle charge (1) est portée conjointement par tous les aéronefs (2 ; 2.1-2.4) au moyen d'au moins un élément flexible (3 ; 3.1-3.4) pour chaque aéronef, dans lequel une attitude et/ou une position de la charge (1) est modifiée en modifiant une longueur de l'un au moins des éléments flexibles (3 ; 3.1-3.4) ; **caractérisé en ce que** l'attitude et/ou la position de la charge (1) est modifiée tout en maintenant l'attitude et l'altitude de la pluralité d'aéronefs sensiblement constantes.

2. Procédé selon la revendication 1, dans lequel pour modifier sa longueur, le au moins un élément flexible (3 ; 3.1-3.4) est enroulé ou déroulé par un dispositif de modification de longueur (4), spécialement un treuil ou similaire.

**3.** Procédé selon la revendication 1 ou 2, dans lequel l'attitude de la charge (1) est modifiée sans modifier l'altitude des aéronefs (2 ; 2.1-2.4) dans l'espace.

**4.** Procédé selon l'une quelconque des revendications 1 à 3, dans lequel au moins trois aéronefs (2 ; 2.1-2.4) sont utilisés.

**5.** Procédé selon l'une quelconque des revendications 1 à 4, dans lequel une pluralité, de préférence la totalité, des éléments flexibles (3 ; 3.1-3.4) sont modifiés en longueur en coordination les uns avec les autres.

**6.** Procédé selon l'une quelconque des revendications 1 à 5, dans lequel tous les éléments flexibles (3 ; 3.1-3.4) sont modifiés en longueur suivant la même valeur.

**7.** Procédé selon l'une quelconque des revendications 1 à 5, dans lequel l'un au moins des éléments flexibles (3 ; 3.1-3.4) est modifié en longueur suivant un degré supérieur ou inférieur par rapport aux autres éléments flexibles (3 ; 3.1-3.4).

**8.** Procédé selon l'une quelconque des revendications 1 à 7, dans lequel une trajectoire pour un mouvement de translation et de rotation planifié de la charge (1) est calculée et, en utilisant des modèles dynamiques et cinématiques d'un système total qui comprend la charge (1), les éléments flexibles (3 ; 3.1-3.4), de préférence le dispositif de modification de longueur (4) selon la revendication 2, et les aéronefs (2 ; 2.1-2.4), les aéronefs (2 ; 2.1-2.4) et de préférence le dispositif de modification de longueur (4) sont actionnés de manière à décrire cette trajectoire.

**9.** Procédé selon la revendication 8, dans lequel chaque aéronef (2 ; 2.1-2.4) est relié à la charge (1) via un élément flexible (3 ; 3.1-3.4) et de préférence un dispositif de modification de longueur (4) selon la revendication 2, dans lequel une position et une attitude de chaque aéronef (2; 2.1-2.4) sont commandées de telle sorte qu'une tension soit générée dans l'élément flexible (3 ; 3.1-3.4) respectif, laquelle tension est nécessaire afin d'amener la charge (1) à une attitude souhaitée.

**10.** Procédé selon la revendication 8 ou 9, dans lequel toutes les valeurs mesurées nécessaires pour actionner les aéronefs (2 ; 2.1-2.4) sont obtenues par des capteurs à bord des aéronefs (2 ; 2.1-2.4), spécialement des valeurs mesurées liées à la position, la vitesse, l'accélération, l'attitude, les rotations et la vitesse de rotation ainsi qu'à une longueur et une vitesse respectives des éléments flexibles (3 ; 3.1-3.4) et de préférence à une tension respective des éléments flexibles (3 ; 3.1-3.4).

**11.** Procédé selon l'une quelconque des revendications 8 à 10, dans lequel chaque aéronef (2 ; 2.1-2.4) commande lui-même son propre mouvement de translation et de rotation et une longueur de son élément flexible (3 ; 3.1-3.4) afin de décrire la trajectoire.

**12.** Système de transport de charge volante, comprenant une charge et une pluralité d'aéronefs capables de vol stationnaire (2 ; 2.1-2.4), de préférence de multicoptères à décollage et atterrissage verticaux ayant une pluralité de rotors espacés, commandés électriquement, qui pour transporter une charge (1) ont chacun au moins un élément flexible (3 ; 3.1-3.4) qui d'une part est relié à l'aéronef (2 ; 2.1-2.4) approprié et d'autre part est relié ou apte à être relié à la charge (1), dans lequel pour modifier une attitude et/ou une position de la charge (1), au moins un, de préférence deux, de manière spécialement préférée tous les aéronefs (2 ; 2.1-2.4) a/ont un dispositif de modification de longueur (4) pour modifier une longueur de l'élément flexible (3 ; 3.1-3.4) approprié, **caractérisé en ce que** l'attitude et/ou la position de la charge (1) est modifiée tout en maintenant l'attitude et l'altitude des aéronefs sensiblement constantes.

**13.** Système de transport de charge volante selon la revendication 12, dans lequel l'élément flexible (3 ; 3.1-3.4) est en forme de cordage, de courroie, de mou ou de câble et le dispositif de modification de longueur (4) est en forme de treuil pour le cordage, la courroie, le mou ou le câble.

**14.** Système de transport de charge volante selon la revendication 12 ou 13, dans lequel des unités de commande (5) des aéronefs (2 ; 2.1-2.4) sont conçues et configurées pour calculer une trajectoire pour un mouvement de translation et de rotation planifié de la charge (1), soit individuellement, soit conjointement, et utilisant des modèles dynamiques et cinématiques d'un système total comprenant une charge (1), des éléments flexibles (3 ; 3.1-3.4), le dispositif de modification de longueur (4) et les aéronefs (2 ; 2.1-2.4) eux-mêmes, afin d'actionner les aéronefs (2 ; 2.1-2.4) et le au moins un dispositif de modification de longueur (4) de manière à décrire cette trajectoire.

**15.** Système de transport de charge volante selon l'une quelconque des revendications 12 à 14, dans lequel chaque aéronef (2 ; 2.1-2.4) est conçu pour commander son propre mouvement de translation et de rotation et de préférence une longueur de son élément flexible (3 ; 3.1-3.4) afin de décrire la trajectoire.

**16.** Système de transport de charge volante selon l'une quelconque des revendications 12 à 15, dans lequel les aéronefs (2 ; 2.1-2.4) ont chacun des capteurs pour déterminer des valeurs mesurées nécessaires pour actionner un aéronef (2 ; 2.1-2.4) approprié, spécialement des capteurs pour la position, la vitesse, l'accélération, l'attitude, les rotations et les vitesses de rotation ainsi qu'une longueur et une vitesse respectives des éléments flexibles (3 ; 3.1-3.4) et de préférence une tension respective des éléments flexibles (3 ; 3.1-3.4).

17. Système de transport de charge volante selon l'une quelconque des revendications 12 à 16, dans lequel au moins un aéronef (2 ; 2.1-2.4) a l'un au moins d'une unité de mesure inertielle, d'un GPS ou similaire, d'un altimètre et de préférence l'un d'un lidar, d'un radar, d'une caméra optique et/ou d'un capteur à ultrasons sur l'un des aéronefs ou répartis sur différents aéronefs.

18. Système de transport de charge volante selon l'une quelconque des revendications 12 à 17, dans lequel les aéronefs sont en liaison de communication les uns avec les autres, de préférence sans fil, pour un échange de données entre des unités de commande (5) des aéronefs (2 ; 2.1-2.4).

**Fig. 1**

**Fig. 2**

Fig. 3

Fig. 4

Fig. 5

**Fig. 6**

**Fig. 7**

**Fig. 8**

**Fig. 9**

$$\mathbf{x}_i = [\mathbf{q}_i, \mathbf{x}_l, \mathbf{u}_i, \Omega_i]$$

**Fig. 10**

**Fig. 11**

**EP 3 772 460 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2818406 A1
- EP 2881324 A1

- WO 2019079100 A1
- US 9422139 B1

**Non-patent literature cited in the description**

- Multi-UAV Cooperation and Control for Load Transportation and Deployment. **MAZA I et al.** JOURNAL OF INTELLIGENT AND ROBOTIC SYSTEMS ; THEORY AND APPLICATIONS (INCORPORATING MECHATRONIC SYSTEMS ENGINEERING). KLUWER ACADEMIC PUBLISHERS, 13 August 2009, vol. 57, 417-449